# EUROPEAN PATENT SPECIFICATION

(11) **EP 0 714 727 B1**
(45) Date of publication and mention of the grant of the patent: **29.04.1998**
(21) Application number: 95850210.6
(22) Date of filing: 28.11.1995
(51) Int. Cl.: B23K 31/02, B63B 3/52

(54) **Assembly in the vehicle carrying deck of a ship**
Aufbau des Fahrzeugdeckes eines Schiffes
Montage du pont porteur de véhicules d'un bâteau

(30) Priority: 29.11.1994 FI 945632
(43) Date of publication of application: 05.06.1996
(73) Proprietor: FINNYARDS OY, FIN-26101 Rauma (FI)
(72) Inventor: Opas, Veikko, SF-26200 Rauma (FI); Olkinuora, Pauli, SF-26100 Rauma (FI); Luosma, Jorma, SF-26100 Rauma (FI)
(74) Representative: Mossmark, Anders

(56) References cited:
- DE-U- 9 216 602
- FR-A- 2 414 653
- FR-A- 2 674 783
- US-A- 4 000 952

## Description

The present invention relates to an assembly according to the preamble of claim 1 for use as a vehicle carrying deck structure made from aluminium for vehicle carriers.

The structure disclosed in the following is intended for high-speed ships built using aluminium structures. In the context of the present text, the word aluminium is used in a general sense referring to actual aluminium alloy materials and other light alloys.

The most common construction material in ships is steel. Steel is an extremely advantageous construction material as it offers high strength at reasonable material costs and relatively easy manufacture of steel structures, combined with the established and well known computation and fabrication methods of the structures. However, steel has high specific weight making steel structures heavy. The high weight of steel structures has so far posed no problem in ship construction, since the ship's lightweight in conventional vessels of relatively slow speed has not been any serious limitation. Steel structures have offered sufficient strength in the most cost-efficient way without raising the ship's lightweight excessively.

In the construction of faster ships, the ship's total mass becomes an extremely decisive factor, because at high speeds the propulsion of any incremental weight requires a considerable amount of extra engine power output, whereby any additional mass involves the selection of a larger and more expensive main engine resulting in higher fuel consumption. Therefore, reduction of the ship's lightweight is possible only through the use of structural materials lighter than steel. As in large vessels the mere purchase price of structural materials becomes an extremely significant cost factor, of known light materials only aluminium remains a viable alternative in terms of cost. The price of aluminium alloys and semifabricated structures made thereof is reasonable and the manufacturing techniques of aluminium structures are relatively well established. Yet, the fabrication and design of aluminium structures are appreciably more demanding than with steel structures. For instance, welding of aluminium structures is more difficult than welding of steel, and light structures are often implemented using different kinds of shell structures having a high strength under tensile, compressive and bending stresses, while their strength under point loads may be low. In ship constructions, point loads occur mainly in the deck structures and particularly on vehicle carrying decks. Due to the large, varying point loads imposed by vehicle wheels on vehicle carrying decks, the use of aluminium shell structures requires special design details in these structures.

It is an object of the present invention to provide an assembly suited for facilitating the fabrication of a load-bearing vehicle deck from aluminium shell-structure elements.

The goal of the invention is achieved by means of adapting at the joint between the deck beams such a joining section that is capable of distributing the load at the joint over a larger area.

More specifically, the assembly according to the invention is defined in claim 1.

The invention provides significant benefits.

By virtue of the invention, the ship's vehicle carrying decks and other deck structures can be fabricated using two-part lightweight shell structures. As large deck areas cannot be designed into a contiguous shell structure, such areas must be fabricated from a number of smaller elements which are assembled by means of joints into a contiguous plane. Stresses imposed on the fabricated deck plane must be arranged to be transmitted smoothly over the joints without permitting large, concentrated stresses to occur in the joints. By means of the invention, the load imposed on the joint between two deck beams can be distributed over a larger area thus avoiding sharp concentrated stresses. As the joint also acts as a support point of the deck plane, it may easily become subjected to a bending moment which for point loads may be imposed differently on the upper and lower surface of the deck beam element. Such a bending moment imposes a particularly high stress on the upper surface plate of the shell structure and its welded joint, and the load is a cyclic alternating load. Such stresses can be mainly eliminated by means of the structure according to the invention. Since aluminium is known to endure only a limited number of cycles of alternating load, it is imperative to keep the amplitude of the load cycles as low as possible. The present invention also facilitates the installation of the deck beams onto the supports from above. All weldments can be carried out as filled welds or against a backing strip which essentially simplifies the demanding welding operation. A large amount of metallic mass with respect to the joint thickness will be located at the joint weld, whereby heat is effectively transferred away from the welding point thus keeping the thermal effects deleterious to the strength of the aluminium material at a reasonable level and making the fabrication of the structure easier.

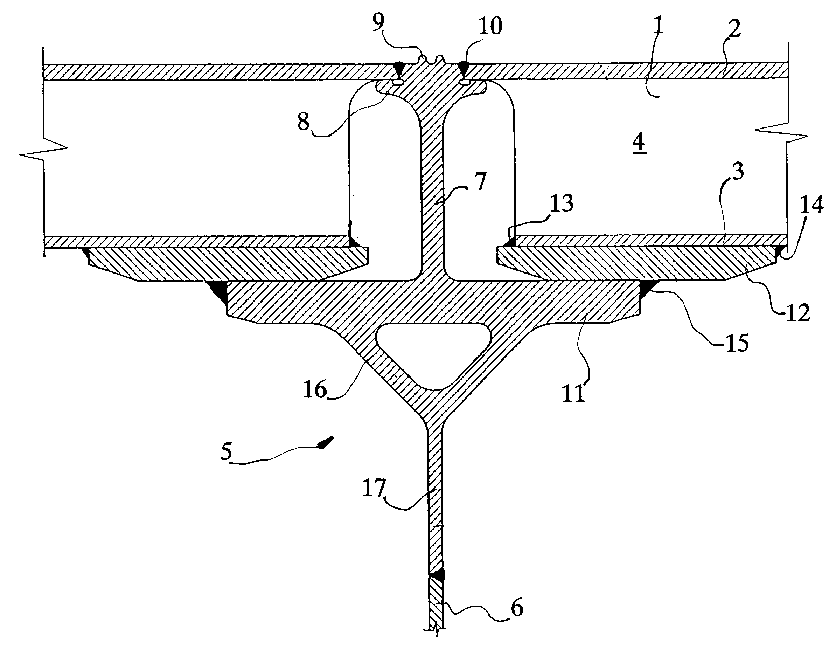

In the following the invention will be explained in greater detail with reference to the appended drawing illustrating an embodiment of the joint implemented in accordance with the invention.

The assembly according to the invention is intended for such deck constructions in which the deck planes are fabricated from deck beam elements 1. The deck beams 1 are elongated wide-flange elements comprising a top plate 2 and a bottom plate 3 disposed at a distance thereof. Between the deck plates 2, 3 are disposed spacing webs 4. The spacing webs may be made oblique, straight or curved, or alternatively, they may comprise different kinds of cellular structures. Such deck beams may be fabricated in a number of different manners and their cross section may be almost of any kind. According to a preferred embodiment, the deck beams are made by die extrusion of a continuous section integrally comprising said flat surface plates 2, 3 and oblique spacing webs 4, which divide the spaces between the surface plates 2, 3 into elongated cavities with a triangular cross section. From such deck beams 1 the deck plate is fabricated by welding a number of the elongated beam elements 1 in parallel to form a deck plate extending over the entire width of the deck. The wide deck plates are joined longitudinally together at their ends by means of the assembly according to the invention.

The deck beams 1 are joined longitudinally at their ends by means of a purpose-designed continuous jointing section 5. Such a continuous jointing section 5 is made to extend transversely over the entire width of the ship and underneath the section is disposed a fixed bracket 6 capable of taking the load imposed on the deck plate. The upper part of the jointing section 5 has a main web 7 provided with support bracket edges 8 at both sides. The top plates 2 of the deck beams 1 are placed onto these support bracket edges 8 and the top plates are attached by weldments to the upper part of the jointing section 5. The top area of the jointing section remaining between the support bracket edges 8 forms a separating bridge 9, which outspaces the joint welds 10 of the end-to-end joined deck beams from each other. During welding, the support bracket edges 8 act as a backing strip thus aiding the weldment operation. The bottom plate of the deck beams 1 is placed onto the support flanges 11 of the jointing section. First, a stiffening slab 12 is attached by welding to the end of the deck beams 1. The joint welds 13, 14 of the slab 12 are made so that one weldment is made at the edge coinciding with the end of the bottom plate 3 of the deck beam 1 and the other weldment is made at the opposite edge of the slab 12. The support flanges 11 of the jointing section 5 extend approximately to the middle of the stiffening slabs 12 and are attached at their outer edges by a weld 15 to the stiffening slabs 12. Under the support flanges 11 is provided a triangular bracket 16 tapering into joint web 17 with which the jointing section is attached to the fixed bracket 6. The triangular bracket 16 comprises two branches extending under the support flanges 11 at both sides of the center line of the jointing section.

The function of the jointing section 5 is to provide suitable elasticity at the joint particularly when the deck is stressed by cyclically repeated point loads. The jointing section rests supported by a fixed bracket at its center line, and the web falling on the center line forms an almost stiff, nonelastic structure. The stiffening slab 12 adapted to the edge of the bottom plate 3 of the deck beam 1 is placed onto the support flanges 11. In such a joint, the stiffening slab 12 together with the support flanges 11 forms the vertical load bearing part of the joint. When a concentrated load is received on the deck, the deck plane will sag downward between the support brackets and the deck plane is deflected. In the joint according to the invention, the support flanges 11 will then be bent downward and the stiffening slab 12 simultaneously assumes a position determined by the deflection of the deck beam 1. As the stiffening slab 12 and the support flange are attached by a single weld only, they together form a hinge-like rocking joint in which the stiffening slab 12 and the deck beam can take the position determined by the deck load.

In the joint according to the invention, the support flanges 11 bear the vertical component of the load. The transverse loads in turn are imposed on the joint 10 between the top plate 2 of the deck beam element 1 and the upper part of the jointing section, and correspondingly, also via the bottom plate 3 of the deck beam element and the stiffening slab 12 to the joints 13, 14, and 15. Therefore, the top plate 2 is chiefly subjected to tensile stress which under an alternating load causes less fatigue in the structure than a bending moment. Moreover, the tensile and compressive stresses are distributed more uniformly in the structure than bending moments which easily cause tensile stress peaks. Accordingly, the fatigue strength of the joint is elevated by a number of reasons. The elasticity of the joint is determined by appropriate dimensioning of the support flanges 11 and the triangular bracket 16. The load imposed on the edge of the bottom plate 3 of the deck beam 1 is distributed by means of the stiffening slab 12 over a larger area. For small loads, the stiffening slab may not necessarily be needed at all. As is evident from the diagram, the ends of the deck beams are cut so as to make the top plate 2 extend longer than the bottom plate 3 and to provide the beam ends with a lightening cut at the spacing webs. This shaping of the beam end transfers the point of influence of the force imposed on the support flanges from the bottom plate in a manner that obviously gives a method of controlling the deflection of the flange. When the point of influence of the force is displaced at a distance from the main web 7, the support flanges will be deflected more and in a better controlled manner.

Besides the dimensions of the jointing section, its shape may be varied, too. Obviously, the height of the main web 7 is determined by the thickness of the deck beam 1. As the function of the support bracket edges 8 of the top part of the main web 7 is to aid the weldment of the joint 10 the top plate, their shape can be varied freely. The support bracket edges 8 may even be omitted, whereby the joint weld must be provided by some other means with a backing strip to avoid complication of the welding operation.

## Claims

1. An assembly for joining deck plates, which are comprised of deck beams (1) incorporating a bottom and a top plate (3, 2), having a shell structure and having been attached to each other in parallel, so that said deck plates are joined to each other at the edges formed by the ends of said deck beams (1), **characterized** by a jointing section (5) comprising
- a main web (7) attached at its upper part to the top plate (2) of said deck beams (1), and
- support flanges (11) projecting in the direction of said deck beams (1) from said main web (7) and extending under the bottom plates (3) of said deck beams.

2. An assembly as defined in claim 1, **characterized** in that said jointing section incorporates a jointing web (17) running in parallel with said main web (7) under said support flanges (11) for the purpose of attaching said jointing section (5) to a fixed bracket.

3. An assembly as defined in claim 2, **characterized** by oblique spacing webs disposed to extend at a distance below said support flanges (11) downward from said main web (7), said spacing webs forming a triangular structure connecting said support flanges (11) to said jointing web (17).

4. An assembly as defined in any of foregoing claims, **characterized** by stiffening slabs (12) which are adapted at the edges of the bottom plates (3) of the deck beams (1) so as to coincide with the ends of the deck beams, said slabs being located between said support flanges (11) and said bottom plates (3) and said stiffening slabs being attached to said support flanges (1) at the outermost edges of said flanges.

5. An assembly as defined in any of foregoing claims, **characterized** by support bracket edges (8) formed to the upper part of the main web (7), said edges being adapted under the edges of said top plates (2) and to provide a backing strip for the weldment of the top plates (2).

6. An assembly as defined in any of foregoing claims, **characterized** by a separating bridge (9) which runs parallel to and above the main web (7), said bridge being located between said support bracket edges (8) so as to outdistance said top plates (2) from their welds (10).

7. An assembly as defined in any of foregoing claims, **characterized** in that the end of said deck beams (1) is shaped so as to make said top plate (2) extend essentially up to said main web (7) and to make said bottom plate (3) extend up to a distance thereof.

## Patentansprüche

1. Montageeinheit zur Verbindung von Deckplatten,die aus Deckträgern (1) besteht, die eine Boden- und eine Kopfplatte (3,2) beinhalten, welche eine Schalenstruktur aufweisen und parallel zueinander zusammengebaut sind,derart, daß die Deckplatten an den Ecken miteinander verbunden sind, die durch die Deckträger (1) gebildet sind,gekennzeichnet durch einen Verbindungsabschnitt (5), der aufweist:
- eine Hauptrippe (7), die mit ihrem oberen Teil an der Kopfplatte (2) der Deckträger (1) angebracht ist, und
- Stützflansche (11), die in Richtung der Deckträger (1) von der Hauptrippe (7) vorstehen und sich unter den Bodenplatten (3) der Deckträger erstrecken.

2. Montageeinheit nach Anspruch 1,
**dadurch gekennzeichnet**,
daß der Verbindungsabschnitt (5) eine Verbindungsrippe (17) aufweist, die parallel zur Hauptrippe (7) unter den Stützflanschen (11) verläuft, um den Verbindungsabschnitt (5) mit einem festen Träger (6) zu verbinden.

3. Montageeinheit nach Anspruch 2, gekennzeichnet durch schräg verlaufende Abstandsrippen, die so angeordnet sind,daß sie in einem Abstand unterhalb der Stützflansche (11) unterhalb der Hauptrippe (7) verlaufen, wobei die Abstandsrippen eine dreieckige Struktur bilden, die die Stützflansche (11) mit der Verbindungsrippe (17) verbinden.

4. Montageeinheit nach einem der vorangehenden Ansprüche, gekennzeichnet durch Versteifungsplatten (12), die an den Ecken der Bodenplatten (3) der Deckträger (1) so angepaßt bzw. abgestimmt sind, daß sie mit den Enden der Deckträger (1) zusammenfallen, wobei diese Versteifungsplatten (12) zwischen den Stützflanschen (11) und den Bodenplatten (3) angeordnet sind, und wobei die Versteifungsplatten an den Stützflanschen (11) an deren äußersten Kanten befestigt sind.

5. Montageeinheit nach einem der vorangehenden Ansprüche, gekennzeichnet durch Stützträgerkanten (8),die an dem oberen Teil der Hauptrippe (7) ausgebildet sind, wobei diese Kanten unter den Kanten der Kopfplatten (2) vorgesehen sind und eine Schweißunterlage für die Schweißkonstruktion der Kopfplatten (2) bilden.

6. Montageeinheit nach einem der vorangehenden Ansprüche, gekennzeichnet durch eine Trennbrücke (9), die parallel zu und oberhalb der Hauptrippe (7) verläuft, wobei die Trennbrücke (9) zwischen den Stützträgerkanten (8) so angeordnet ist, daß die von ihren Schweißverbindungen (10) der Kopfplatten (2) voneinander getrennt sind.

7. Montageeinheit nach einem der vorangehenden Ansprüche, gekennzeichnet dadurch, daß das Ende der Deckträger (1) so gebildet ist, daß sich die Kopfplatte (2) im wesentlichen bis zur Hauptrippe (7) erstreckt und daß sich die Bodenplatte (3) bis zu einem bestimmten Abstand von derselben erstreckt.

## Revendications

1. Ensemble de raccordement de plaques de pont, qui sont constituées de poutres (1) de pont comprenant une plaque inférieure et une plaque supérieure (3, 2), ayant une structure à enveloppe et fixées mutuellement en direction parallèle, afin que les plaques de pont soient raccordées mutuellement aux bords formés par les extrémités des poutres (1) de pont, caractérisé par un tronçon (5) de jonction qui comporte :
- une joue principale (7) fixée à sa partie supérieure à la plaque supérieure (2) des poutres (1) de pont, et
- des flasques (11) de support dépassant dans la direction des poutres (1) de pont de la joue principale (7) et s'étendant sous les plaques inférieures (3) des poutres de pont.

2. Ensemble selon la revendication 1, caractérisé en ce que le tronçon de jonction comprend une joue de jonction (17) disposée parallèlement à la joue principale (7) sous les flasques de support (11) pour la fixation du tronçon de jonction (5) à une équerre fixe.

3. Ensemble selon la revendication 2, caractérisé par des joues obliques d'espacement disposées afin qu'elles s'étendent à une certaine distance au-dessous des flasques de support (11) en descendant depuis la joue principale (7), les joues d'entretoise formant une structure triangulaire raccordant les flasques de support (11) à la joue de jonction (17).

4. Ensemble selon l'une quelconque des revendications précédentes, caractérisé par des dalles (12) de renforcement qui sont adaptées aux bords des plaques inférieures (3) des poutres de pont (1) afin qu'elles coïncident avec les extrémités des poutres de pont, les dalles étant disposées entre les flasques de support (11) et les plaques inférieures (3) et les dalles de renforcement étant fixées aux flasques de support (1) aux bords les plus externes des flasques.

5. Ensemble selon l'une quelconque des revendications précédentes, caractérisé par des bords (8) d'équerre de support formés à la partie supérieure de la joue principale (7), les bords étant adaptés sous les bords des plaques supérieures (2) et étant destinés à former une bande d'appui pour le soudage des plaques supérieures (2).

6. Ensemble selon l'une quelconque des revendications précédentes, caractérisé par un pontet (9) de séparation qui est parallèle à la joue principale (7) et au-dessus de celle-ci, le pontet étant placé entre les bords (8) d'équerre de support afin qu'il dépasse des plaques supérieures (2) à partir de leur soudure (10).

7. Ensemble selon l'une quelconque des revendications précédentes, caractérisé en ce que l'extrémité des poutres de pont (1) a une configuration telle que la plaque supérieure (2) s'étend pratiquement jusqu'à la joue principale (7) et que la plaque inférieure (3) s'étend jusqu'à une certaine distance de cette joue.
